# EUROPEAN PATENT APPLICATION

(11) **EP 4 518 414 A1**
(43) Date of publication of application: **05.03.2025**
(21) Application number: 24196177.0
(22) Date of filing: 23.08.2024
(51) Int. Cl.: H04W 24/10, G06N 3/08, G06N 20/00

(54) **METHODS AND APPARATUSES FOR OBTAINING MEASUREMENTS FOR OFFLINE TRAINING**

(30) Priority: 30.08.2023 FI 20235967
(71) Applicant: Nokia Technologies Oy, 02610 Espoo (FI)
(72) Inventor: HASSAN, Sakira, 02780 Espoo (FI); TOMALA, Malgorzata, 54-511 Wroclaw (PL); DOSTI, Endrit, 02130 Espoo (FI)
(74) Representative: Script Intellectual Property LLP

(57) **Abstract**

Example embodiments provide methods for obtaining measurements for offline training of an artificial intelligence model at a server. A user node is configured to receive, from a server, a first request for one or more additional measurements for generalization during offline training of a two-sided artificial intelligence model; determine one or more additional measurements not available to the user node based on the first request; and transmit, to a network node, a second request for one or more additional measurements when the first request comprises one or more measurements not available to the user node. Apparatuses, methods, and computer programs are disclosed.

## Description

### TECHNICAL FIELD

The present application generally relates to information technology. Some example embodiments of the present application relate to aggregation of user equipment (UE) measurements and additional measurements from network for offline training, for example, in channel state information (CSI) compression.

### BACKGROUND

3GPP aims to enable an AI/ML (artificial intelligence/machine learning) framework that can support optimization methods with AI/ML based algorithms for enhanced performance and/or reduced complexity and overhead. Therefore, there is a need for development of functional requirements of AI/ML architecture and identification of the areas where AI/ML could improve the performance of air-interface functions.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments may enable an efficient way to extract and gather measurements needed by a server for offline training of an AI/ML model. Further, alignment between different sources providing the measurements may be enabled. In addition, reduction of signaling overhead may be achieved with filtering of the measurements provided for the server. This may be achieved by the features of the independent claims. Further implementation forms are provided in the dependent claims, the description, and the drawings.

According to a first aspect, a user node is provided, the user node comprising at least one processor; and at least one memory including instructions which, when executed by the at least one processor, cause the user node at least to receive, from a server, a first request for one or more additional measurements for generalization during offline training of a two-sided artificial intelligence model; determine one or more additional measurements not available to the user node in response to the first request; and transmit, to a network node, a second request for one or more additional measurements when the one or more additional measurements are not available to the user node.

According to an example embodiment of the first aspect, the at least one memory comprises instructions which, when executed by the at least one processor, cause the user node to receive the one or more additional measurements not available to the user node from the network node in response to the second request; and forward the one or more additional measurements received from the network node to the server in addition to measurements performed by the user node for the offline training.

According to an example embodiment of the first aspect, the second request comprises the first request and one or more measurements performed by the user node for the offline training.

According to an example embodiment of the first aspect, the at least one memory further comprises instructions which, when executed by the at least one processor, cause the user node to receive, from the network node, the one or more additional measurements not available to the user node combined with the measurements of the user node; and forward the combined measurements to the server.

According to an example embodiment of the first aspect, the at least one memory comprises instructions which, when executed by the at least one processor, cause the user node to receive, from the network node, at least one of a configuration to send the measurements if having a difference above a certain threshold compared to previously sent measurements by the user node, wherein the threshold is preconfigured by the network node or computed based on a current state of the user node, a configuration to send the measurements if signal-to-noise ratio is above a certain level, or a configuration to send the measurements for a subset of data used for the offline training.

According to a second aspect, a network node is provided, the network node comprising at least one processor and at least one memory including instructions which, when executed by the at least one processor, cause the network node at least to receive, from one or more user nodes or a server, a request for one or more additional measurements for generalization during offline training of a two-sided artificial intelligence model; determine one or more additional measurements based on the request; and transmit the determined one or more additional measurements to the one or more user nodes or to the server.

According to an example embodiment of the second aspect, the one or more additional measurements comprise at least one of a physical layer measurement, a physical layer signal-to-noise ratio, a battery power level, statistics from different cells in an aggregated form, observed performance of the artificial intelligence model, feedback for the artificial intelligence model, observed intermediate performance of the artificial intelligence model, a dataset generated from the artificial intelligence model or assistance information.

According to an example embodiment of the second aspect, the at least one memory further comprises instructions which, when executed by the at least one processor, cause the network node to receive one or more measurements performed by the one or more user nodes for the offline training, wherein the one or more measurements are received with the request for the one or more additional measurements or in response to a request from the network node triggered by the request for the one or more additional measurements; combine the measurements of the one or more user nodes with the one or more additional measurements determined by the network node; and transmit the combined measurements to the one or more user nodes or to the server.

According to an example embodiment of the second aspect, the at least one memory further comprises instructions which, when executed by the at least one processor, cause the network node to configure the one or more user nodes to at least one of send measurements if having a difference above a certain threshold compared to previously sent measurements by the user node, wherein the threshold is preconfigured by the network node or computed based on a current state of the user node, send measurements if signal-to-noise ratio is above a certain level, or configure different user nodes to send measurements of different subsets of data used for the offline training.

According to an example embodiment of the second aspect, the at least one memory comprises instructions which, when executed by the at least one processor, cause the network node to filter the received measurements at least one of based location information of the one or more user nodes or based on correlation between the received measurements.

According to an example embodiment of the second aspect, the at least one memory comprises instructions which, when executed by the at least one processor, cause the network node to perform denoising of the received measurements.

According to an example embodiment of the second aspect, the network node comprises a base station or a location management function.

According to an example embodiment of the second aspect, the base station comprises multiple distributed units and a central unit, and wherein the at least one memory comprises instructions which, when executed by the at least one processor, cause the network node to receive the request and the measurements by the multiple distributed units from different user nodes; determine, by the multiple distributed units, the one or more additional measurements based on the received measurements and the request; send, by the multiple distributed units, the determined one or more additional measurements with the received measurements to the central unit; at least one of combine or filter the additional measurements and the measurements received from the multiple distributed units by the central unit; and forward, by the central unit, the combined measurements to the server.

According to a third aspect, a method may comprise receiving, from a server, a first request for one or more additional measurements for generalization during offline training of a two-sided artificial intelligence model; determining one or more additional measurements not available to a user node in response to the first request; and transmitting, to a network node, a second request for one or more additional measurements when the one or more measurements are not available to the user node.

According to an example embodiment of the third aspect, the method may comprise receiving the one or more additional measurements not available to the user node from the network node in response to the second request; and forwarding the one or more additional measurements received from the network node to the server in addition to measurements performed by the user node for the offline training.

According to an example embodiment of the third aspect, the second request comprises the first request and one or more measurements performed by the user node for the offline training.

According to an example embodiment of the third aspect, the method may comprise receiving, from the network node, the one or more additional measurements based on the second request combined with the measurements of the user node; and forwarding the combined measurements to the server.

According to an example embodiment of the third aspect, the method may comprise receiving, from the network node, at least one of a configuration to send the measurements if having a difference above a certain threshold compared to previously sent measurements by the user node, wherein the threshold is preconfigured by the network node or computed based on a current state of the user node, a configuration to send the measurements if signal-to-noise ratio is above a certain level, or a configuration to send the measurements for a subset of data used for the offline training.

According to a fourth aspect, a method may comprise receiving, from one or more user nodes or a server, a request for one or more additional measurements for generalization during offline training of a two-sided artificial intelligence model; determining one or more additional measurements based on the request; and transmitting the determined one or more additional measurements to the one or more user nodes or to the server.

According to an example embodiment of the fourth aspect, the one or more additional measurements comprise at least one of a physical layer measurement, a physical layer signal-to-noise ratio, a battery power level, statistics from different cells in an aggregated form, observed performance of the artificial intelligence model, feedback for the artificial intelligence model, observed intermediate performance of the artificial intelligence model, a dataset generated from the artificial intelligence model or assistance information.

According to an example embodiment of the fourth aspect, the method may comprise receiving one or more measurements performed by the one or more user nodes for the offline training, wherein the one or more measurements are received with the request for the one or more additional measurements or in response to a request from the network node triggered by the request for the one or more additional measurements; combining the measurements of the one or more user nodes with the one or more additional measurements determined by the network node; and transmitting the combined measurements to the one or more user nodes or to the server.

According to an example embodiment of the fourth aspect, the method may comprise configuring the one or more user nodes to at least one of send measurements if having a difference above a certain threshold compared to previously sent measurements by the user node, wherein the threshold is preconfigured by the network node or computed based on a current state of the user node, send measurements if signal-to-noise ratio is above a certain level, or configure different user nodes to send measurements of different subsets of data used for the offline training.

According to an example embodiment of the fourth aspect, the method may comprise filtering the received measurements at least one of based location information of the one or more user nodes or based on correlation between the received measurements.

According to an example embodiment of the fourth aspect, the method may comprise performing denoising of the received measurements.

According to an example embodiment of the fourth aspect, the method is carried out by a base station or a location management function.

According to an example embodiment of the fourth aspect, the base station comprises multiple distributed units and a central unit, and the method comprises: receiving the request and the measurements by the multiple distributed units from different user nodes; determining, by the multiple distributed units, the one or more additional measurements based on the received measurements and the request; sending, by the multiple distributed units, the determined one or more additional measurements with the received measurements to the central unit; at least one of combining or filtering the additional measurements and the measurements received from the multiple distributed units by the central unit; and forwarding, by the central unit, the combined measurements to the server.

According to a fifth aspect, a computer program may be configured, when executed by a processor, to cause a user node at least to perform the following: receive, from a server, a first request for one or more additional measurements for generalization during offline training of a two-sided artificial intelligence model; determine one or more additional measurements not available to the user node in response to the first request; and transmit, to a network node, a second request for one or more additional measurements when the one or more additional measurements are not available to the user node. The computer program may further comprise instructions for causing the user node to perform any example embodiment of the method of the third aspect.

According to a sixth aspect, a user node may comprise means for receiving, from a server, a first request for one or more additional measurements for generalization during offline training of a two-sided artificial intelligence model; determining one or more additional measurements not available to the user node in response to the first request; and transmitting, to a network node, a second request for one or more additional measurements when the one or more additional measurements are not available to the user node. The user node may further comprise means for performing any example embodiment of the method of the third aspect.

According to a seventh aspect, a computer program may comprise instructions for causing a network node to perform at least the following: receive, from one or more user nodes or a server, a request for one or more additional measurements for generalization during offline training of a two-sided artificial intelligence model; determine one or more additional measurements based on the request; and transmit the determined one or more additional measurements to the one or more user nodes or to the server. The computer program may further comprise instructions for causing the network node to perform any example embodiment of the method of the fourth aspect.

According to an eighth aspect, a network node may comprise means for receiving, from one or more user nodes or a server, a request for one or more additional measurements for generalization during offline training of a two-sided artificial intelligence model; determining one or more additional measurements based on the request; and transmitting the determined one or more additional measurements to the one or more user nodes or to the server. The network node may further comprise means for performing any example embodiment of the method of the fourth aspect.

Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to explain the example embodiments. In the drawings:
FIG. 1 illustrates an example of a communication network according to an example embodiment;
FIG. 2 illustrates an example of an apparatus configured to practice one or more example embodiments;
FIG. 3 illustrates an example of a message sequence chart for data collection by a single UE and based on UE sided decision making according to an example embodiment;
FIG. 4 illustrates an example of a message sequence chart for data collection by a single UE and based on NW sided decision making according to an example embodiment;
FIG. 5 illustrates another example of a message sequence chart for data collection by a single UE and based on NW sided decision making according to an example embodiment;
FIG. 6 illustrates an example of a message sequence chart for data collection by multiple UEs according to an example embodiment;
FIG. 7 illustrates an example of a message sequence chart for combining and forwarding measurements from multiple UEs in a split DU-CU architecture, according to an example embodiment; and
FIG. 8 illustrates an example of a method for assisting in collection of offline training data by a user node according to an example embodiment.
FIG. 9 illustrates an example of a method for assisting in collection of offline training data by a network node according to an example embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present examples may be constructed or utilized. The description sets forth the functions of the example and a possible sequence of operations for constructing and operating the example. However, the same or equivalent functions and sequences may be accomplished by different examples.

Artificial intelligence (AI) generally refers to processes and algorithms that are able to simulate human intelligence. AI may include any type of software or hardware component that supports machine learning (ML) . AI/ML models may be used, for example, for CSI (channel state information) compression. CSI may refer to information which represents the state of a communication link from one or more transmit source(s) to one or more receiver source(s), e.g., between a UE and network (NW) . ML model training may be performed, for example, with a one-sided or a two-sided approach. The one-sided ML model training may refer to either UE sided or NW sided performance and functions monitoring. The two-sided ML model training may refer to joint monitoring of the performance and functions, from both the UE side and the NW side.

In a first approach, joint training of the two-sided ML model may be implemented at a single side or entity, e.g., at the UE side or at the NW side.

In a second approach, joint training including both simultaneous training and sequential training may be used. In the joint training, a generation model and a reconstruction model may be trained in a same loop for forward propagation and backward propagation. The joint training may be performed both at a single node or across multiple nodes, e.g., through gradient exchange between nodes of a network.

In a third approach, separate training at the NW side or the UE side may be used. In separate training, the UE-side CSI generation part and the NW side CSI reconstruction part may be trained by the UE side and the NW side, respectively. Separate training may include sequential training at the UE and the NW, starting with UE side training or starting with NW side training. Alternatively, the separate training may include parallel training at the UE and the NW.

Joint training of the two-sided model at a single side may require UE vendors and NW vendors to share their AI structures with their counterparts, as the training preferably takes place at one entity (UE or NW). For example, an AI encoder may be configured at the UE and an AI decoder may be configured at the NW. Hence, it may be less likely for a majority of stakeholders to endorse the first approach.

AI model sharing may not be required by the second approach, as the training may be assumed to be done in a distributed manner. The second approach, however, may require activation and gradient sharing between distributed training entities in a training run time. This may require sharing massive data. The data may not need to be shared over the air. However, it has been identified that a considerable engineering effort may be needed whenever a new UE type or a new UE vendor is added after an initial training has been completed, as all the UE and NW models may need to be taken into account at the training phase for the first and the second approach.

To enable offline training for both UE sided and NW sided ML models according to the first approach, the second approach, or the third approach, and wherein the ML model training function is located at a NW side, the UE may be configured to report all measurements to the NW. For example, the UE may be configured to include a raw CSI channel matrix or an eigenvector and a precoding matrix in the report. The measurements may further comprise additional information. Hence, the UE may be configured to share both standardized and additional measurements with the NW. The additional measurements may include, for example, non-standardized measurements, assistance information, etc. Assistance information may comprise, for example, timestamps, cell ID, data quality indicators, and the like.

On the other hand, if it assumed that the ML model training function is managed by the UE, a likely location for the training may be an OTT (over-the-top) server. The OTT server may be external to the NW and under control of the UE vendor (a third party). In this case, relevant standardized and additional measurements, done by the UE, may need to be sent to the NW. In addition, the NW may need to forward additional information to the OTT server, if any. This may not be feasible from the NW perspective. Moreover, if the UE and the NW forward these measurements separately, signaling overhead may increase. An objective of this disclosure is to alleviate at least one of these drawbacks.

Example embodiments may enable facilitating AI/ML model training at an external entity, such as an OTT server. An example embodiment may enable the OTT server to extract and gather measurements more efficiently. Further, alignment of collected measurements between different sources, such as the UE and the NW, in both time and spatial domains may be enabled. In addition, filtering of measurement may be provided. This may enable reducing the signaling overhead.

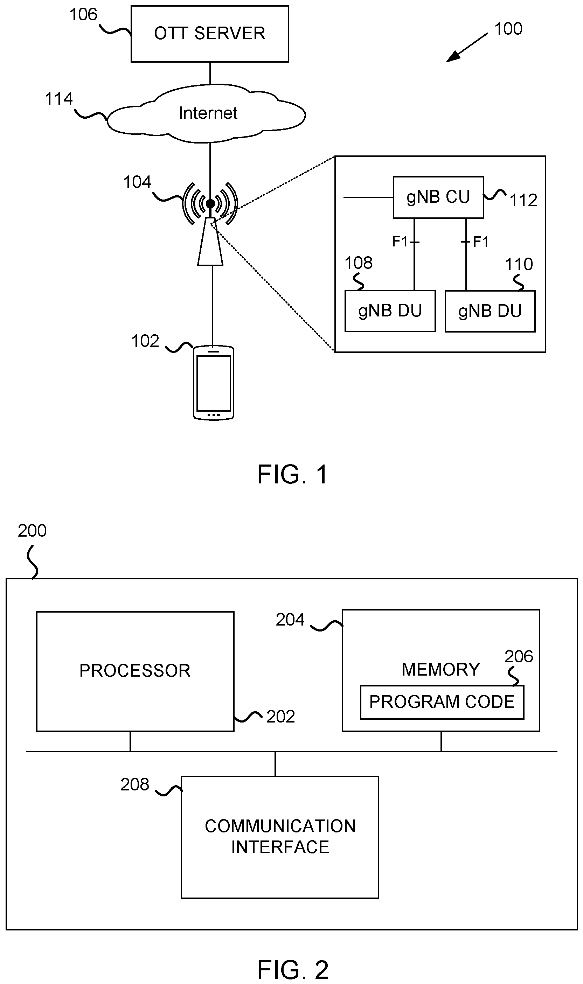

FIG. 1 illustrates an example of a communication network. The communication network 100 may comprise one or more network nodes, such as base stations. In FIG. 1, only one base station is shown and it is represented by a gNB 104. The communication network 100 may further comprise one or more client nodes, which may be also referred to as user nodes or UEs. For example, the communication network 100 may comprise a UE 102. The UE 102 may communicate with one or more of the base stations via wireless radio channel(s). Communications between UE 102 and gNB 104 may be bidirectional. Hence, any of the devices may be configured to operate as a transmitter and/or a receiver.

A gNB may refer to a 5G base station. A gNB may be divided into two physical entities called a central unit (CU) and a distributed unit (DU). A CU may be configured to provide support for higher layers of a protocol stack such as SDAP (service data adaptation protocol), PDCP (packet data convergence protocol) and RRC (radio resource control). A DU may be configured to provide support for lower layers of the protocol stack such as RLC (radio link control), MAC (medium access control) and physical layer. A gNB may comprise a single CU 112, and the CU 112 may control multiple DUs 110, 108 An interface between the CU 112 and the DUs 110, 108 may be called F1.

The base stations may be configured to communicate with core network elements over a communication interface, such as for example a control plane interface or a user plane interface NG-C/U. The core network elements may perform a variety of functions, including mediate interworking of the UEs served by the RAN nodes with other entities via external networks such as the Internet 114. Base stations may be also called radio access network (RAN) nodes or access points (APs) and they may be part of a radio access network between the core network and the UEs. Core network elements (e.g., access and mobility management function/user plane function, AMF/UPF, location management function, LMF) and gNB may be generally referred to as network nodes or network devices. Although depicted as a single device, a network node may not be a stand-alone device, but for example a distributed computing system coupled to a remote radio head.

The communication network 100 may further comprise one or more over-the-top (OTT) service providers. The OTT service provider may communicate with the one or more UEs via the Internet 114, the core network elements and/or the one or more RAN nodes. For example, the OTT service provider may be configured to deliver data to the one or more UEs through the Internet 114 and/or the one or more base stations. The OTT service provider may be also configured to receive data from the one or more UEs and/or the one or more base stations. The OTT service provider may refer to an external entity, i.e., a third-party provider. The OTT service provider may comprise one or more servers and/or other entities configured to perform one or more functions described herein. The OTT service provider may comprise, for example, an OTT server 106. An OTT server under control of a UE vendor may be called a UE OTT server.

The communication network 100 may be configured for example in accordance with the 5th Generation digital cellular communication network, as defined by the 3rd Generation Partnership Project (3GPP). In one example, the communication network 100 may operate according to 3GPP 5G-NR. It is however appreciated that example embodiments presented herein are not limited to this example network and may be applied in any present or future wireless or wired communication networks, or combinations thereof, for example other type of cellular networks, short-range wireless networks, broadcast or multicast networks, or the like.

According to an example embodiment, a UE may be configured to request one or more additional measurements from NW, such as from a gNB. The UE may be configured to combine its own measurements with the additional measurements. The UE may be further configured to transmit the combined measurements to a training provider. The training provided may be a server, such as an OTT server. Here, the UE may act as an intermediate interface between the NW and the OTT server. The OTT may be responsible for processing steps, such as filtering and/or bias removal, from the received measurements. This procedure may support UE sided ML model training according to the first approach, ML model training according to the second approach, as well as the collaborative ML model training according to the third approach. However, details like how an external entity, e.g., the OTT server, can obtain NW data and how authorization and agreements between different parties are resolved are out of scope of this disclosure.

According to an example embodiment, a UE may be configured to forward measurements to NW. The NW may be then configured to append measurements performed by the NW with the measurements received from the UE. The NW may be configured to forward the combined measurements to a training provided, such as an OTT server. Here, the NW can be configured to decide on the amount of additional information to be shared along with various measurements collected from one or more UEs. The procedure may support each of the UE sided and NW sided training according to the first approach, ML model training according to the second approach, as well as the collaborative ML model training according to the third approach.

FIG. 2 illustrates an example of an apparatus 200 configured to practice one or more example embodiments.

The apparatus 200 may comprise at least one processor 202. The at least one processor 202 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a graphical processing unit, a tensor processing unit, a microcontroller unit (MCU), a hardware accelerator, a special-purpose computer chip, or the like.

The apparatus 200 may further comprise at least one memory 204. The memory 204 may be configured to store, for example, computer program code 206 or the like, for example operating system software and application software. The memory 204 may comprise one or more volatile memory devices, one or more non-volatile memory devices, and/or a combination thereof. For example, the memory 204 may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.).

The apparatus 200 may further comprise one or more communication interfaces 208 configured to enable apparatus 200 to transmit and/or receive information, to/from other apparatuses. The communication interface 208 may be configured to provide at least one wireless radio connection, such as for example a 3GPP mobile broadband connection (e.g. 3G, 4G, 5G and beyond). However, the communication interface 208 may be configured to provide one or more other type of connections, for example a wireless local area network (WLAN) connection such as for example standardized by IEEE 802.11 series or Wi-Fi alliance; a short range wireless network connection such as for example a Bluetooth, NFC (near-field communication), or RFID connection; a wired connection such as for example a local area network (LAN) connection, a universal serial bus (USB) connection or an optical network connection, or the like; or a wired Internet connection. The communication interface 208 may comprise, or be configured to be coupled to, at least one antenna to transmit and/or receive radio frequency signals. One or more of the various types of connections may be also implemented as separate communication interfaces, which may be coupled or configured to be coupled to a plurality of antennas.

When the apparatus 200 is configured to implement some functionality, some component and/or components of the apparatus 200, such as for example the at least one processor 202 and/or the memory 204, may be configured to implement this functionality. Furthermore, when the at least one processor 202 is configured to implement some functionality, this functionality may be implemented using instructions such as program code 206 comprised, for example, in the memory 204.

The functionality described herein may be performed, at least in part, by one or more computer program product components such as software components. According to an embodiment, the apparatus 200 comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus 200 comprises means for performing at least one method described herein. In one example, the means comprises the at least one processor 202, the at least one memory 204 including program code 206 configured to, when executed by the at least one processor 202, cause the apparatus 200 to perform the method.

The apparatus 200 may comprise for example a computing device such as for example a network node, a server device, a client node, a mobile phone, a tablet computer, a laptop, or the like. In one example, the apparatus 200 may comprise user equipment, such as the UE 102, and be configured to perform various functions described herein for the UE 102. In one example, the apparatus 200 may comprise a base station, such as the gNB 104, and be configured to perform various functions described herein for the gNB 104. Although the apparatus 200 is illustrated as a single device it is appreciated that, wherever applicable, functions of apparatus 200 may be distributed to a plurality of devices.

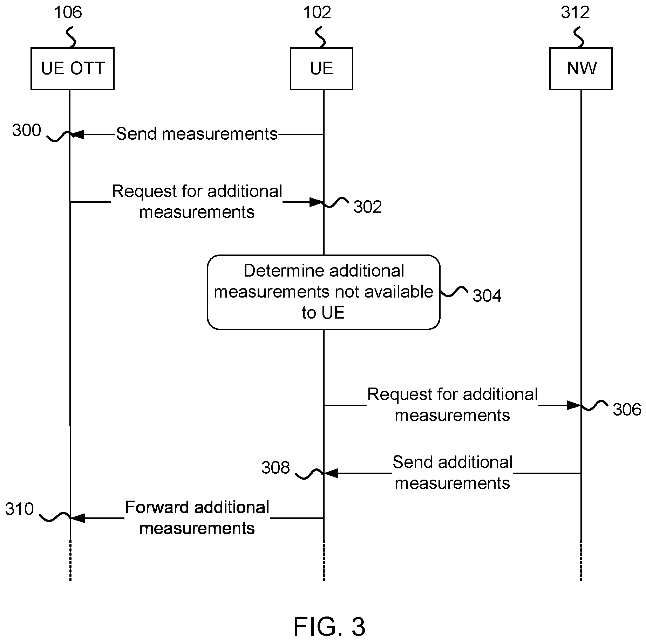

FIG. 3 illustrates an example of a message sequence chart for data collection by a single UE and based on UE sided decision making according to an example embodiment. The procedure may be applicable for gathering data for offline training of an AI/ML model.

For example, a UE 102 may have an established connection with an OTT server 106, such as a UE OTT server. The UE 102 may be an entity interfacing with the OTT server 106. The UE 102 may be responsible to collect and deliver training data to the OTT server 106 for UE sided data.

At 300, the UE 102 may be configured to send measurements performed by the UE to the OTT server 106. At 302, the UE 102 may receive a request from the OTT server 106 for one or more additional measurements. In a training loop, the UE 102 can decide on data content, including deciding to request NW 312 to deliver assistance information that may not be available to the UE 102.

At 304, the UE 102 may be configured to determine one or more additional measurements that may be needed for the training. At 306, the UE may be configured to request the one or more additional measurements from the NW 312. The NW 312 may comprise, for example, a RAN node such as the gNB 104 or a LMF (location management function). The one or more additional measurements may be requested by the UE 102 based on the request received at 302 and measurements that are not available at the UE.

At 308, the requested additional measurement (s) are received by the UE 102 from the NW 312. At 310, the UE 102 may be configured to forward the additional measurement(s) received from the NW 312 to the OTT server 106. Hence, the UE 102 may be responsible to forward the complete data (e.g., measurements from the UE 102 and the additional measurements from the NW 312) to the OTT server 106.

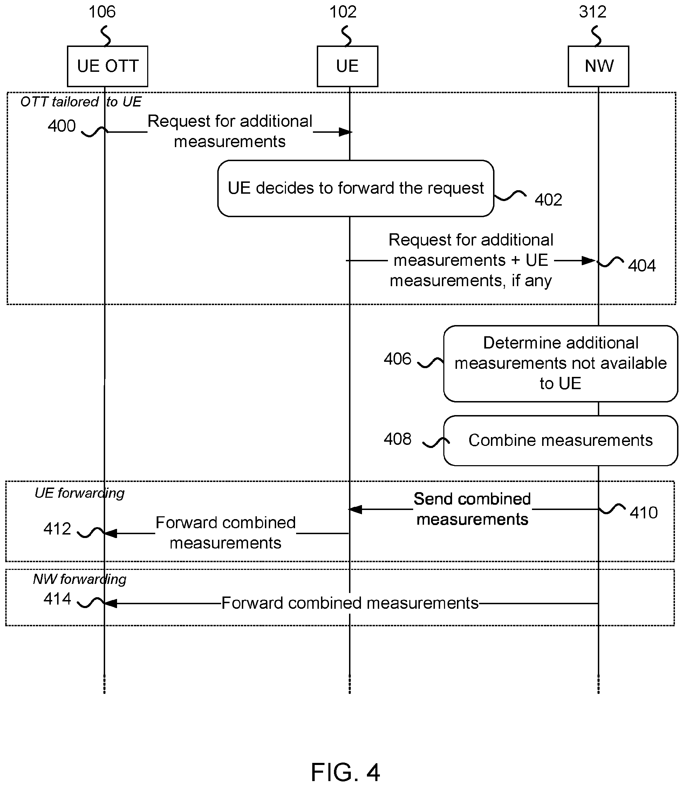

FIG. 4 illustrates an example of a message sequence chart for data collection by a single UE and based on NW sided decision making according to an example embodiment. In this embodiment, the NW 312 may be responsible to forward a data container with the training data for the OTT server 106. Further, the OTT server 106 may be a UE OTT server tailored to the UE 102.

Here, the OTT server 106 can have established connection to both sides, i.e., the UE 102 and RAN (e.g., the gNB 104 or a LMF entity), to request for data collection. The NW 312 may be configured to be in control of combining its own measurements and possibly additional information received from the UE 102.

At 400, the UE 102 may receive a request for one or more additional measurements from the OTT server 106. At 402, the UE 102 may be configured to decide to forward the request received from the OTT server 106 to the NW 312. At 404, the NW 312 may receive the forwarded request from the UE 102. The UE 102 may be further configured to send one or more measurements performed or obtained by the UE 102 to the NW 312.

At 406, the NW 312 may be configured to determine one or more additional measurements based on the request received at 404. The one or more additional measurements may comprise measurements that are not available at the UE 102. The additional measurements may comprise, for example, internal measurements performed by the NW 312. The additional measurements may comprise, for example, different analytics generated by the NW 312, such as at least one of various statistics from different cells of the NW 312 in an aggregated form, observed performance of configured AI/ML models, feedback for the AI/ML model, observed intermediate performance of the AI/ML model, a dataset generated from the AI/ML model or functionality. The additional measurements may be collected by the NW 312, for example, from one or more network data analytics functions. The additional measurements may further comprise assistance information. The one or more measurements from the UE may comprise, for example, at least one of a L1 (layer 1/physical layer) measurement, a L1-SNR (signal-to-noise ratio) measurement or a battery power level. The one or more measurements may be also requested by the NW from the UE. The one or more measurements may comprise additional measurements performed by the UE for generalization of the AI/ML model during offline training. At 408, the NW 312 may be configured to combine the measurements received from the UE 102, if any, with the one or more additional measurements performed by the NW 312.

At 410, the NW 312 may be configured to send at least the one or more additional measurements to the UE 102. If the NW 312 received measurements from the UE 102, the NW 312 may be configured to send the combined measurements to the UE 102. At 412, the UE 102 may be configured to forward the received measurements to the OTT server 106 for offline training.

Alternatively, at 414, the NW may be configured to send at least the one or more additional measurements, or the combined measurements, directly to the OTT server 106 for the offline training.

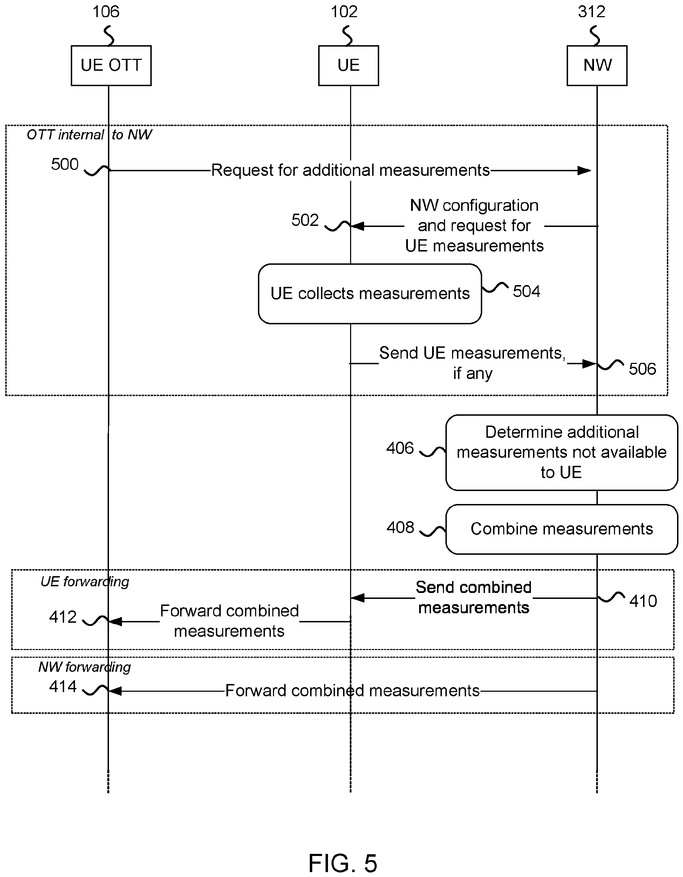

FIG. 5 illustrates another example of a message sequence chart for data collection by a single UE and based on NW sided decision making according to an example embodiment. The procedure described in FIG. 5 is similar to the procedure of FIG. 4, but here the OTT server may be an internal server of the NW 312.

In this case, at 500, the NW 312 may be configured to receive the request for one or more additional measurements from the OTT server 106 instead of the UE 102. Thereafter, at 502, the NW 312 may be configured to send a request to the UE 102 for measurements. The NW 312 may be also configured to send one or more network configurations to the UE 102 for the measurements. At 504, the UE 102 may be configured to collect the measurements requested by the NW 312. At 506, the UE 102 may be configured to send the collected measurements to the NW 312, if any.

At 406, the NW 312 may be configured to determine the one or more additional measurements that may not be available to the UE 102. The one or more additional measurements are now determined based on the request received directly from the OTT server 106 instead of forwarded by the UE 102. At 408, the NW 312 may be configured to combine the measurements received from the UE 102, if any, with the additional measurement(s) performed by the NW 312.

At 410, the NW 312 may be configured to send at least the one or more additional measurements determined at 406 to the UE 102. If the NW 312 received measurements from the UE 102, the NW 312 may be configured to send the combined measurements to the UE 102. At 412, the UE 102 may be configured to forward the received measurements to the OTT server 106. Alternatively, at 414, the NW 312 may be configured to forward at least the one or more additional measurements, or the combined measurements, directly to the OTT server 106 instead of forwarding them via the UE 102.

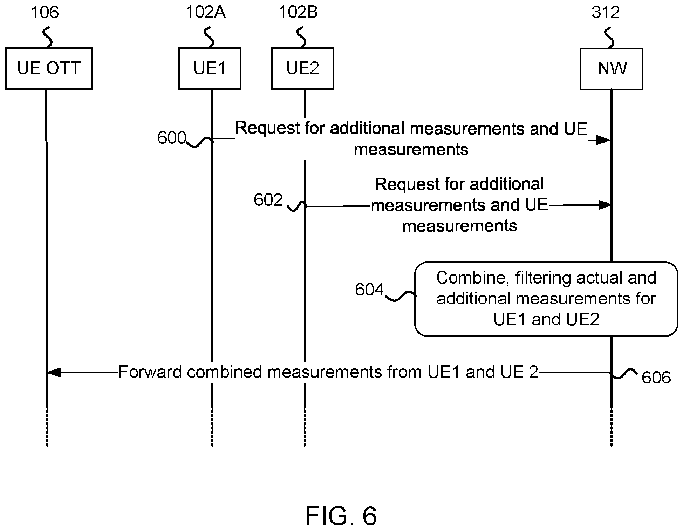

FIG. 6 illustrates an example of a message sequence chart for data collection by multiple UEs according to an example embodiment.

In one approach, each of the multiple UEs can request separately for additional measurements from NW and the NW can then send the same additional measurements to the different UEs. Thereafter, the different UEs can separately forward the additional measurements to the OTT server. In other words, the same or similar additional measurements are forwarded by the NW to multiple UEs. Moreover, an alignment between different measurements sources would need to be considered. To address these issues, the data collection from multiple UEs can be improved as follows:

At 600, a first UE 102A can be configured to send the request for one or more additional measurements to the NW 312 together with one or more measurements of the first UE 102A.

At 602, a second UE 102B can be configured to send the request for one or more additional measurements to the NW 312 together with one or more measurements of the second UE 102B.

After receiving the requests for additional measurements along with the UE measurements at 600 and 602, the NW 312 may be configured to synchronize the signaling from the different UEs. For example, the NW 312 may be configured to filter the actual measurements received from the first UE 102A and the second UE 102B and the additional measurements performed by the NW 312 for the first UE 102A and the second UE 102B based on the received requests. The NW 312 may be then configured to combine the filtered measurements at 604.

For example, the NW 312 may be configured to buffer data and process the buffered data. The buffering may be realized by monitoring of the UEs in a certain time window with appropriate AI capabilities and involved in the relevant measurement collection. Further, after gathering collective input from the multiple UEs, the NW may be configured to filter out data and append the data with its own AI/ML model training data.

Thereafter, at 606, the NW 312 may be configured to send the combined measurements to the OTT server 106.

This may enable reducing signaling overhead. Further, different inputs from the different UEs may be synchronized. For example, if the first UE delivers measurements, such as event-based data, in a different time than the second UE, the NW 312 may determine a `timing window' to process data from the two different UEs. This may enable that training data (i.e., the combined data send by the NW 312 for the OTT server at 606) may not be biased towards one particular UE.

The NW 312 may be also configured to request different types of data from different UEs that are nearby. This is because the nearby UEs may be likely to have correlated measurements. Hence, each UE may be allowed to signal less information which can be used for training AI/ML models. This may enable saving resources at the UEs. At the same time, because the measurements may be correlated, the NW 312 may combine the measurements and form a complete data sample to be sent to the OTT server. In this case, the complete data sample may comprise relevant radio resource measurements (RRM) collected from multiple UEs, UE and NW assistance information, and possibly NW sided measurements.

For example, in a BM (beam management) use case, the UEs may report both set A and set B beam measurements. In this case, if the two UEs are nearby and have similar channel conditions, the NW 312 may configure the first UE to report measurements related to the set A beams, and the second UE to report measurements related to the set B beams. The NW 312 may be configured to combine these measurements and form a complete training sample comprising measurements from both set A and set B beams. Each of the UEs may transmit either set A or set B beams, and thus perform less signaling. The NW 312 may be further configured to combine and filter all the received measurements and forward the combined measurements for the OTT server for training.

Although example procedures described herein are conducted with an OTT server, the OTT server is one example, and the procedures are applicable also to other entities with AI/ML model training functionalities. The entity can be any server, such as a UE OTT, an CAM (operations and management) system or NWDAF, that has relevant interface(s) established and is capable to request training data from at least one of the UE or the NW.

It may not be necessary to collect measurements from all neighboring UEs of the NW 312. Therefore, the NW 312 may be configured to filter the UE data based on location information, if available.

Depending on a requested data quality, the NW 312 may configure UEs that may be in poor signal-to-noise ratio (SNR) conditions (e.g., at cell edge) to not transmit training data. The NW 312 may for example configure the UEs to transmit measurements when the SNR is above a certain threshold, or to not send measurements when the SNR is below the certain threshold. Hence, resources at the UE side may be saved, since the data collected at low SNR conditions are likely to be very noisy. Moreover, for successful transmission of packets, the UE would likely need to try to send the data several times, e.g., using HARQ (hybrid automatic repeat request). This could result in excessive power expenditure.

The NW 312 may be able to provide information on the UEs which are at a cell edge, for example, in cases wherein the data is needed for the purpose of building models that generalize well also at cell edge. In addition, the NW 312 may be configured to perform denoising of the obtained data.

The NW 312 can orchestrate collection of different resolutions of data from different UEs. This way, the NW 312 can aid the OTT server 106 in building a dataset that is rich in different resolutions of the data, locations of the UEs etc.

During frequent data collection, a UE may be configured by the NW 312 to provide only measurements that are significantly different from the previously reported measurements. The difference can be computed by the UE with statistical correlation methods (such as Pearson's correlation) between successive measurements. A threshold for the difference between measurements can be preconfigured by the NW 312. Alternatively, the threshold can be computed based on a current state of the UE. This may allow reducing data transmission over the air interface or in a container such that only data which may be necessary for the training may be transmitted.

Similarly, the NW 312 can analyze a correlation between measurements coming from multiple UEs, and only forward measurements which are not redundant to offload pressure in a backbone, i.e., the core architecture or structure of the AI/ML model.

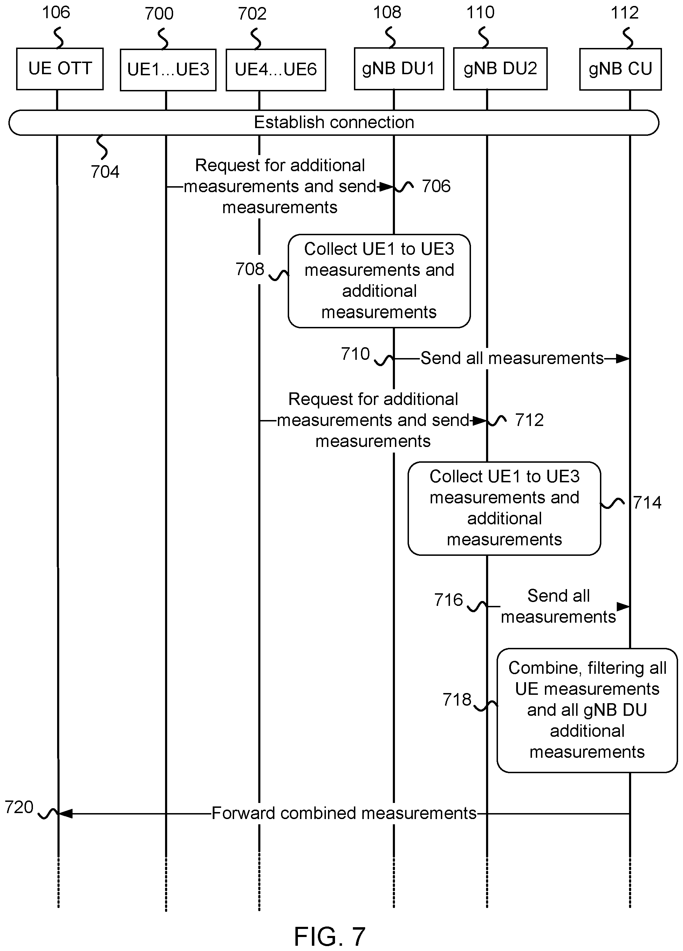

FIG. 7 illustrates an example of a message sequence chart for combining and forwarding measurements from multiple UEs in a split DU-CU architecture, according to an example embodiment.

In the split DU-CU architecture, each DU can collect UE measurements within two or more cells. The CU can then collect the measurements from UEs connected to the DUs and additional measurements from all DUs connected to the CU with a F1 interface. After collecting, the CU may be responsible for combining the measurements and filtering the unnecessary measurements before transmitting the data to an AI/ML model training server, such as the (UE) OTT server 106. The CU can also additionally be configured to control the content and the amount of data to be transmitted to the OTT server.

For example, at 704, a connection may be established between the UE OTT server 106, a first set of UEs 700, a second set of UEs 702, a first gNB DU 108, a second gNB DU 110 and a gNB CU 112. Each set of UEs may comprise one or more UEs. In an embodiment, each set of the UEs may comprise a plurality of UEs.

At 706, the first set of UEs 700 may be configured to send a request for one or mroe additional measurements to the first gNB DU 108. The first set of UEs 700 may be further configured to send their UE measurements together with the request.

At 708, the first gNB DU 108 may be configured to collect the UE measurements of the first set of UEs 700 and one or more additional measurements performed by the first gNB DU 108 based on the received request. The one or more additional measurements may comprise requested additional measurements that are not available to the first set of UEs 700. At 710, the first gNB DU 108 may be configured to send all the measurements collected at 708 to the gNB CU 112.

At 712, the second set of UEs 702 may be configured to send a request for one or more additional measurements to the second gNB DU 110. The second set of UEs 702 may be further configured to send their UE measurements together with the request.

At 714, the second gNB DU 110 may be configured to collect the UE measurements of the second set of UEs 702 and one or more additional measurements. The one or more additional measurements may be performed by the second gNB DU 110 based on the received request and comprise measurements that are not available to the second set of UEs 702. At 716, the second gNB DU 110 may be configured to send all the measurements collected at 714 to the gNB CU 112.

At 718, the gNB CU 112 may be configured to combine and filter all the UE measurements and the additional measurements of the gNB DU 108 and gNB DU 110 received at 710 and 716. The combined measurement determined by the gNB CU 112 at 718 may be then sent by the gNB CU 112 to the UE OTT server at 720.

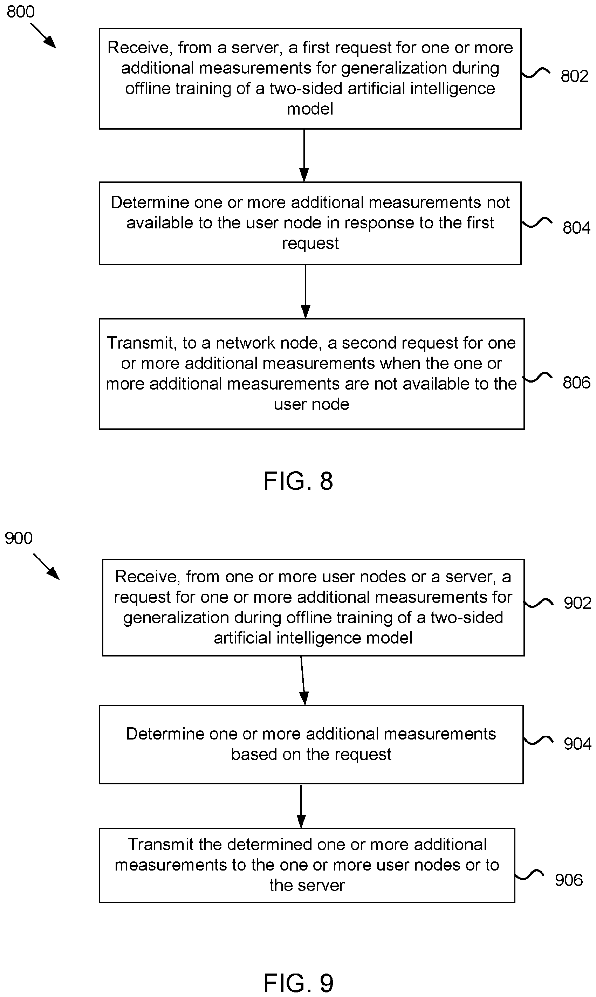

FIG. 8 illustrates an example of a method 800 for assisting in collection of offline training data by a user node, according to an example embodiment.

At 802, the method may comprise receiving, from a server, a first request for one or more additional measurements for generalization during offline training of a two-sided an artificial intelligence model.

At 804, the method may comprise determining one or more additional measurements in response to the first request.

At 806, the method may comprise transmitting, to a network node, a second request for one or more additional measurements when the one or more additional measurements are not available to the user node.

FIG. 9 illustrates an example of a method 900 for assisting in collection of offline training data by a network node, according to an example embodiment.

At 902, the method may comprise receiving, from one or more user nodes or a server, a request for one or more additional measurements for generalization during offline training of a two-sided an artificial intelligence model.

At 904, the method may comprise determining one or more additional measurements based on the request.

At 906, the method may comprise transmitting the determined one or more additional measurements to the one or more user nodes or to the server.

Further features of the methods directly result from the functionalities and parameters of the apparatuses, as described in the appended claims and throughout the specification and are therefore not repeated here. It is noted that one or more operations of the method may be performed in different order.

An apparatus, for example a network node, a user node or a server, may be configured to perform or cause performance of any aspect of the method(s) described herein. Further, a computer program may comprise instructions for causing, when executed, an apparatus to perform any aspect of the method(s) described herein. Further, an apparatus may comprise means for performing any aspect of the method(s) described herein. According to an example embodiment, the means comprises at least one processor, and memory including program code, the at one memory and the program code configured to, when executed by the at least one processor, cause performance of any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first' or 'second' subjects, this does not necessarily indicate any order or importance of the subjects. Instead, such attributes may be used solely for the purpose of making a difference between subjects.

As used in this application, the term `circuitry' may refer to one or more or all of the following: (a) hardware-only circuit implementations (such as implementations in only analog and/or digital circuitry) and (b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A user node, comprising:
at least one processor; and
at least one memory including instructions which, when executed by the at least one processor, cause the user node at least to:
receive, from a server, a first request for one or more additional measurements for generalization during offline training of a two-sided artificial intelligence model;
determine one or more additional measurements not available to the user node in response to the first request; and
transmit, to a network node, a second request for one or more additional measurements when the one or more additional measurements are not available to the user node.

2. The user node of claim 1, wherein the at least one memory comprises instructions which, when executed by the at least one processor, cause the user node to:
receive the one or more additional measurements not available to the user node from the network node in response to the second request; and
forward the one or more additional measurements received from the network node to the server in addition to measurements performed by the user node for the offline training.

3. The user node of claim 1, wherein the second request comprises the first request and one or more measurements performed by the user node for the offline training.

4. The user node of claim 3, wherein the at least one memory further comprises instructions which, when executed by the at least one processor, cause the user node to:
receive, from the network node, the one or more additional measurements not available to the user node combined with the one or more measurements of the user node; and
forward the combined measurements to the server.

5. The user node of claim 3 or 4, wherein the at least one memory comprises instructions which, when executed by the at least one processor, cause the user node to:
receive, from the network node, at least one of a configuration to send the measurements if having a difference above a certain threshold compared to previously sent measurements by the user node, wherein the threshold is preconfigured by the network node or computed based on a current state of the user node, a configuration to send the measurements if signal-to-noise ratio is above a certain level, or a configuration to send the measurements for a subset of data used for the offline training.

6. A network node, comprising:
at least one processor; and
at least one memory including instructions which, when executed by the at least one processor, cause the network node at least to:
receive, from one or more user nodes or a server, a request for one or more additional measurements for generalization during offline training of a two-sided artificial intelligence model;
determine one or more additional measurements based on the request; and
transmit the determined one or more additional measurements to the one or more user nodes or to the server.

7. The network node of claim 6, wherein the one or more additional measurements comprise at least one of a physical layer measurement, a physical layer signal-to-noise ratio, a battery power level, statistics from different cells in an aggregated form, observed performance of the artificial intelligence model, feedback for the artificial intelligence model, observed intermediate performance of the artificial intelligence model, a dataset generated from the artificial intelligence model or assistance information.

8. The network node of claim 6 or 7, wherein the at least one memory further comprises instructions which, when executed by the at least one processor, cause the network node to:
receive one or more measurements performed by the one or more user nodes for the offline training, wherein the one or more measurements are received with the request for the one or more additional measurements or in response to a request from the network node triggered by the request for the one or more additional measurements;
combine the measurements of the one or more user nodes with the one or more additional measurements determined by the network node; and
transmit the combined measurements to the one or more user nodes or to the server.

9. The network node of claim 8, wherein the at least one memory further comprises instructions which, when executed by the at least one processor, cause the network node to:
configure the one or more user nodes to at least one of send measurements if having a difference above a certain threshold compared to previously sent measurements by the user node, wherein the threshold is preconfigured by the network node or computed based on a current state of the user node, send measurements if signal-to-noise ratio is above a certain level, or configure different user nodes to send measurements of different subsets of data used for the offline training.

10. The network node of any of claims 8 or 9, wherein the at least one memory comprises instructions which, when executed by the at least one processor, cause the network node to:
filter the received measurements at least one of based location information of the one or more user nodes or based on correlation between the received measurements.

11. The network node of any of claims 8 to 10, wherein the at least one memory comprises instructions which, when executed by the at least one processor, cause the network node to:
perform denoising of the received measurements.

12. The network node of any of claims 6 to 11, wherein the network node comprises a base station or a location management function.

13. The network node of claim 12, wherein the base station comprises multiple distributed units and a central unit, and wherein the at least one memory comprises instructions which, when executed by the at least one processor, cause the network node to:
receive the request and the measurements by the multiple distributed units from different user nodes;
determine, by the multiple distributed units, the one or more additional measurements based on the received measurements and the request;
send, by the multiple distributed units, the determined one or more additional measurements with the received measurements to the central unit;
at least one of combine or filter the additional measurements and the measurements received from the multiple distributed units by the central unit; and
forward, by the central unit, the combined measurements to the server.

14. A method, comprising:
receiving, from a server, a first request for one or more additional measurements for generalization during offline training of a two-sided artificial intelligence model;
determining one or more additional measurements not available to the user node in response to the first request; and
transmitting, to a network node, a second request for one or more additional measurements when the one or more additional measurements are not available to the user node.

15. A method, the method comprising:
receiving, from one or more user nodes or a server, a request for one or more additional measurements for generalization during offline training of a two-sided artificial intelligence model;
determining one or more additional measurements based on the request; and
transmitting the determined one or more additional measurements to the one or more user nodes or to the server.
